# EUROPEAN PATENT APPLICATION

(11) **EP 4 721 833 A1**
(43) Date of publication of application: **08.04.2026**
(21) Application number: 24204807.2
(22) Date of filing: 04.10.2024
(51) Int. Cl.: B01D 39/16

(54) **A NON-WOVEN FILTER MEDIA WITH A MELTBLOWN AND NANOFIBERS**

(71) Applicant: Neenah Gessner GmbH, 83052 Bruckmühl (DE)
(72) Inventor: GEISBERGER, Georg, 83052 Bruckmühl (DE); FRITZ, Ellen, 83052 Bruckmühl (DE)
(74) Representative: Plasseraud IP

(57) **Abstract**

The present invention relates to a non-woven filter media (100, 200) comprising:
- a first melt-blown layer (102, 202) comprising fibers made from a polymer material, wherein the polymer material comprises a thermoplastic resin and at least one of a charge adjuvant and a nucleating agent;
- a second layer (104, 204); and
- a third layer (106, 206) arranged between the first layer and the second layer, the third layer being made of electrospun nanofibers.

The present invention also relates to a filter element comprising this filter media and to a bag filter for a heating, ventilation and air conditioning system, where the bag filter comprises the filter media or the filter element.

## Description

### Technical Field

This disclosure pertains to the field of filtration. More specifically, it relates to non-woven filter media, in particular air filter media, as may be used in heating, ventilation and air conditioning filters, i.e., HVAC filters. A particular application is in HVAC bag filters.

### Background Art

Ideally, filters should have a high filtration efficiency, a low pressure drop and a good dirt holding capacity.

The relevant standards for filtration efficiency are ISO Standard 16890 and ASHRAE Standard 52.2 with App. J. According to the ISO standard, air filters are classified in one of three PM classes or a coarse class depending on their filtration efficiency. An air filter with a good filtration efficiency is classified in the highest class, namely the ePM1 class.

An air filter with a low pressure drop limits the power consumption of the associated fan that provides the airflow through the air filter. Accordingly, an air filter with a low pressure drop will have a high energy efficiency ranking, as defined for example by Recommendation Eurovent 4/21-2016.

The dirt/dust holding capacity, DHC, usually is defined for a given filter media by the amount of test dirt that is retained by the filter media. Often, the DHC is prorated to area of filter media and reported as g/m² of filter media.

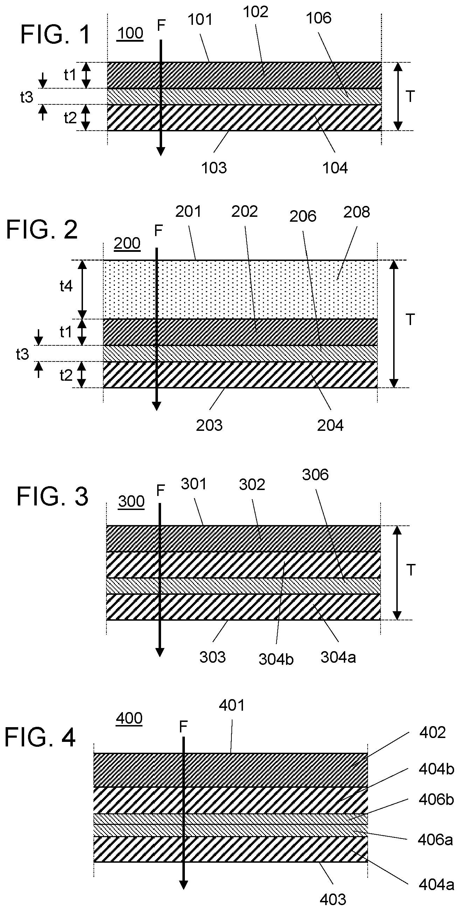

In its Fig. 1 and the corresponding description, document US 2021/0121804 A1 discloses a filter media 10 comprising an electrospun nanofiber layer 12 disposed between a pre-filter layer 14 and a nonwoven layer 16. The pre-filter layer 14 comprises meltblown fibers and may be electrostatically charged.

In its Figs. 2 and 10 and the corresponding description, document US 2010/0181249 A1 discloses a three-layer filter media 200 with a melt-blown layer 202, an electrospun nanofiber layer 204 and a scrim layer 206. The filter media 200 is said to have a high filtration efficiency, a high dust holding capacity and an improved lifespan.

However, there is still a need for further improvements on the filtration efficiency, dust holding capacity, lifespan and/or pressure drop of air filter media.

### Summary

In view of the above, it is an object of the present disclosure to provide a filter media combining a very good filtration efficiency with a low pressure drop and a good dirt holding capacity. The provided filter media should also have an adequate lifespan.

According to the present disclosure, this object is achieved with a non-woven filter media comprising:
a first melt-blown layer comprising fibers made from a polymer material, wherein the polymer material comprises a thermoplastic resin and at least one of a charge adjuvant and a nucleating agent;
a second layer; and
a third layer arranged between the first layer and the second layer, the third layer being made of electrospun nanofibers.

Indeed, the present inventors have found out that the combination of an electrospun nanofiber layer with a melt-blown layer comprising fibers made from a polymer material, wherein the polymer material comprises a thermoplastic resin and at least one of a charge adjuvant and a nucleating agent, leads to a high-end filter media. In particular, the chosen melt-blown layer results in a good protection of the nanofiber layer and acts as a prefilter, which increases the filter media's lifespan.

The following features can be optionally implemented, separately or in combination one with the others:
The media may be an air filter media.

The first melt-blown layer may have a porosity in the range of 91% to 94%.

The first melt-blown layer may be electrostatically charged.

The first melt-blown layer may be a pre-filter layer.

The first melt-blown layer may comprise polypropylene (PP) fibers, polycarbonate (PC) fibers, polyester fibers, polyamide (PA) fibers, polylactide fibers (PLA) or a combination thereof.

The thickness of the first melt-blown layer may be in the range of 0.4 to 1.2 mm.

The air permeability of the first melt-blown layer may be in the range of 1,300 to 3,000 l/(m²s).

The basis weight of the first melt-blown layer may be in the range of 20 to 100 g/m².

The third layer may be a filter layer.

The electrospun nanofibers of the third layer may be polyamide, PA, fibers; polyester fibers, such as polyethylene terephthalate, PET, fibers; polyvinyl chloride, PVC, fibers; polyolefin fibers; polyvinyl alcohol, PVAL, fibers; polyvinylidene fluoride, PVDF, fibers; polyurethane, PUR, fibers; or a combination thereof.

The thickness of the third layer may be in the range of 50 nm to 500 µm.

The air permeability of the third layer may be in the range of 100 to 1,500 l/(m²s).

The basis weight of the third layer may be in the range of 0.001 to 5 g/m².

The total thickness of the media may be in the range of 0.7 to 4.8 mm, in some cases it may be 0.7 to 2.3 mm, in other cases it may be 0.7 to 4.8 mm.

The total air permeability of the media may be in the range of 50 to 1,200 l/(m²s), in some cases it may be 200 to 1,000 l/(m²s).

The total basis weight of the media may be in the range of 40 to 290 g/m², in some cases it may be 40 to 205 g/m², in other cases it may be 100 to 290 g/m².

The total filtration efficiency of the media, according to EN ISO 16890, may be in the range of ePM1 [50%] to ePM1 [90%].

The second layer may be a spunbond layer.

The second layer may comprise bi-component fibers.

The second layer may comprise at least one of polypropylene fibers (PP fibers), polycarbonate fibers (PC fibers), polyester fibers (such as: polyethylene fibers (PE fibers), PET fibers; and/or polybutylene terephthalate fibers (PBT fibers)), PA fibers and PLA fibers..

The thickness of the second layer may be in the range of 0.1 to 1 mm.

The air permeability of the second layer may be in the range of 2,000 to 10,000 l/(m²s).

The basis weight of the second layer may be in the range of 10 to 200 g/m².

The media may further comprise a fourth layer including acrylic fibers, polypropylene (PP) fibers or a combination thereof.

The first melt-blown layer and the third layer may be arranged between the second layer and the fourth layer.

The fourth layer may be a filter layer.

The fourth layer may be electrostatically charged.

The present disclosure also pertains to a filter element comprising the media described above and to air filters in particular to a bag filter for a heating, ventilation and air conditioning system, related HVAC systems as well as to cabin air filters which comprises a non-woven filter media as previously defined. Depending on the specific application the filter media can be pleated.

### Brief Description of Drawings

Other features, details and advantages will be shown in the following detailed description and on the figures, wherein:
**Fig. 1**
   [Fig. 1] is a schematic cross-section of a first embodiment of a non-woven filter media according to the present disclosure.
**Fig. 2**
   [Fig. 2] is a schematic cross-section of a second embodiment of a non-woven filter media according to the present disclosure.
**Fig. 3**
   [Fig. 3] is a schematic cross-section of a third embodiment of a non-woven filter media according to the present disclosure.
**Fig. 4**
   [Fig. 4] is a schematic cross-section of a fourth embodiment of a non-woven filter media according to the present disclosure.
**Fig. 5**

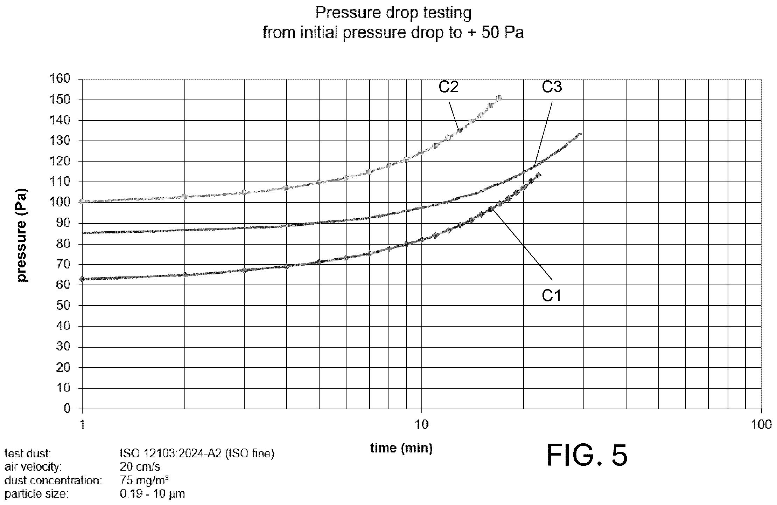

   [Fig. 5] is a graph of pressure vs. time for one exemplary filter media of the present disclosure and a comparative example.

### Description of Embodiments

### Definitions

The following definitions are provided in the context of the present disclosure:

The thickness of a layer or media is the vertical distance between the top and bottom surface of the layer or media. The thickness is determined according to ISO Standard 9073-2:1995 and indicated in millimeters (mm). The test area is 2500 mm² (56.42 mm diameter) with a test plate pressure of 0.5 kPa.

The air permeability of a layer or media is the measured airflow through a specified area of the layer or medium at a specified pressure drop. The air permeability is determined according to ISO Standard 9237:1995 at a pressure difference of 200 Pa with a sample size of 20 cm². It is indicated in liters per square meter and second (l/(m²s)). Any suitable instrument can be used as for example a Textest FX3300 instrument.

The basis weight or grammage of a layer or media is its mass per unit area and is measured according to DIN EN 29073 (1992). It is indicated in grams per square meter (g/m²).

The dust holding capacity of a layer or of the filter medium is measured according to DIN71460-1 . The test conditions involve an incoming flow volume of 20 cm/s, a filter area of 100 cm², a final pressure of +50 Pa, and a mass concentration of 75 g/m³. ISO 12103-A2 (ISO fine) is used as the test dust.

The initial pressure drop of a layer or of the filter medium is measured according to DIN71460-1 at a flow rate of 20 cm/s

Unless otherwise stated, the efficiency of a layer or of the filter medium may be measured according to ISO 16890:2016. This standard is based on tests using aerosols (DEHS, KCl) with a particle size of 0.3 to 1 µm (DEHS) and 1-10 µm (KCl) and classifies the filter medium based on the results for particle sizes PM1, PM2.5 and PM10.

Unless otherwise stated, the fiber diameter may be measured using a scanning electron microscope using automated software (e.g. using a scanning electron microscope available from Phenom Fei with the associated software Fibermetric V2.1). Measurements that capture crossing points of multiple fibers (and therefore do not represent the fiber diameter) are removed manually. Fiber bundles are generally evaluated as one fiber. Measurements are determined by sampling 5 points across the width of a nonwoven fabric (e.g., 1.8 m). Measurements are taken at random on the basis of the SEM image recorded with 1000 fold-magnification. The average fiber diameter at each location is evaluated by the software and an average of the 5 values is taken to determine the average fiber diameter of the nonwoven. At least 500 fibers are measured.

The terms "top surface/layer" and "bottom surface/layer" refer to the position of the filter media when it sits on its surface through which filtered air is intended to come out of the filter media. As such, they can also be referred respectively to "inlet surface/layer" and "outlet surface/layer".

### Embodiments

The different non-woven filter media described in the following find a preferred application as part of a bag filter as used e.g. in heating, ventilation and air conditioning.

Reference is now made to figure 1, which shows a cross-section of a non-woven filter media 100 according to a first embodiment of the present disclosure.

The filter media 100 of figure 1 has an outer top surface 101 and an outer bottom surface 103. Preferably, the filter media 100 is an air filter media. In this case, the filter media 100 is designed for dust-laden air to enter via the outer top surface 101, cross the filter media 100 and exit as filtered air via the outer bottom surface 103, as indicated by the arrow F in figure 1.

The filter media 100 comprises, and may only consist of, three layers, namely a first layer 102, a second layer 104 and a third layer 106. The first layer 102 is a top layer, the second layer 104 is a bottom layer and the third layer 106 is an intermediate layer. Accordingly, the third layer 106 is arranged between the first layer 102 and the second layer 104. In the shown embodiment, the third layer 106 is in contact with the first layer 102 and the second layer 104.

The different layers may be attached to each other through an adhesive, for example a polyurethane or polyolefin-based adhesive.

The total thickness T of the filter media 100, cf. figure 1, may be in the range of 0.7 to 2.3 mm, in particular in the range of 0.75 to 1.5 mm. A preferred value for the total thickness T is 0.86 mm.

The total air permeability of the filter media 100 may be in the range of 50 to 1,200 l/(m²s), preferably of 200 to 1,000 l/(m²s), more preferably in the range of 400 to 900 l/(m²s). A preferred value for the total air permeability is 632 l/(m²s).

The total basis weight of the filter media 100 may be in the range of 40 to 205 g/m², in particular in the range of 70 to 150 g/m². A preferred value for the total basis weight is 100 g/m².

The total filtration efficiency of the filter media 100 may be, according to EN ISO 16890-1 :2016, in the ePM2.5 class or better, preferably in the ePM1 class such as ePM1 [50%] to ePM1[90%]. Most preferably, the total filtration efficiency is in the ePM1[65%] category.

Turning now to the first layer 102, this layer is a melt-blown layer. It may act as a pre-filter layer.

The first layer 102 is a melt-blown layer comprising fibers made from a polymer material, wherein the polymer material comprises a thermoplastic resin and at least one of a charge adjuvant (also called charge-enhancing agent) and a nucleating agent. For further details about the first layer 102 of this embodiment, reference is made to document WO 2022/101203 A1, whose corresponding disclosure is incorporated herein by reference.

The charge adjuvant in the sense of the present invention can be any agent known in the art which serves as a trap for generated charges. However, the charge adjuvant has to be thermally stable at the extrusion temperature of the thermoplastic resin to avoid degradation or volatilization.

Preferably, the charge adjuvant is a hindered amine. Typically, the hindered amine comprises derivatives of tetramethylpiperidine.

Preferably, the hindered amine belongs to the group of hindered amine (light) stabilizers (HA(L)S). More preferably, the charge adjuvant is selected from the group comprising the HA(L)S substances having the following CAS registry numbers: CAS 52829-07-9, CAS 71878-19-8, CAS 106990-43-6, CAS 63843-89- 0, CAS 192268-64-7, CAS 90751-07-8, CAS 193098-40-7, CAS 79720- 19-7, CAS 106917-30-0, CAS 167078-06-0, CAS 131290-28-3, CAS 109423-00-9, CAS 124172-53-8, CAS 199237-39-3, CAS 91788-83- 9, CAS 64022-61-3, CAS 107119-91-5, CAS 100631-43-4, CAS 115055-30-6, CAS 100631-44-5, CAS 64338-16-5, CAS 85099-51-0, CAS 202483-55-4, CAS 76505-58-3, CAS 136504-96-6, CAS 71029- 16-8, CAS 96204-36-3, CAS 130277-45-1, CAS 229966-35-2, CAS 85099-51-0, CAS 147783-69-5, CAS 154636-12-1, CAS 84214-94-8, CAS 99473-08-2, CAS 164648-93-5, CAS 164648-93-5, CAS 42774-15-2 and mixture thereof.

A particularly preferred HALS compound is poly [[6-[(1,1,3,3-tetramethylbutyl)amino]-1,3,5-triazine-2,4-diyl][(2,2,6,6-tetramethyl-4-piperidinyl)imino]-1,6-hexanediyl[(2,2,6,6-tetramethyl-4-piperidinyl)imino]] (CAS 71878-19-8, Chimassorb^{®} 944) or 1,6-Hexanediamine,N,N'-bis(2,2,6,6-tetramethyl-4-piperidinyl)-polymer with 2,4,6-trichloro-1,3,5-triazine, reaction products with N-butyl-1-butanamine and N-butyl-2,2,6,6-tetramethyl-4-piperidinamine (CAS 192268-64-7, Chimassorb^{®} 2020). Alternatively, the charge adjuvant may belong to the group of organic triazine compounds or oligomers with at least one additional nitrogen-containing group, as disclosed for example in WO 97/07272 A1, in the following referred to as "triazine based charge adjuvant" or "TB-CA".

Preferably, the nucleating agent is a clarifier.

Preferably, the nucleating agent is selected from the group consisting of a benzoate salt, a sorbitol acetate, a rosin based nucleating agent, a carboxylic acid amide, a salt of an organophosphorous acid and mixtures thereof.

More preferably, the nucleating agent is selected from the group consisting of a benzoate salt, a carboxylic acid amide, in particular an aromatic trisamide, a salt of an organophosphorous acid and mixtures thereof.

Preferred examples of benzoate salts are sodium benzoate, lithium benzoate, aluminum-hydroxy-bis(4-tert-butylbenzoate ) and mixtures thereof.

Preferred examples of sorbitol acetates are dibenzylidene sorbitol and its derivatives, bis(p-methyl-benzylidene)-sorbitol (MDBS), bis(3,4-dimethyl-benzylidene)-sorbitol (DMDBS), bis(4-propylbenzylidene)propyl-sorbitol (also known as 1,2,3-tri-deoxy-4,6:5,7-bis-O-[(4-propylphenyl)methylene]-nonitol), and mixtures thereof.

Preferred examples of carboxylic acid amides are N,N',N"tris-(2-methylcylcohexyl)-1,2,3-propane-tricarboxamide, N,N'-dicyclo-hexylnaphthalene-dicarboxamide, bis-stearoyl-ethylenediamide, and mixtures thereof, as well as the aromatic trisamides described below. Preferred examples of aromatic trisamides are 1,3,5-benzene-tricarboxamide, 1,3,5-tris(2,2-dimethylpropionylamino)benzene (Irgaclear^{®} XT 386) , and mixtures thereof.

Preferred examples of salts of an organophosphorous acid are the sodium salt of di-(4-tert-butylphenyl)-phospate, the lithium or sodium salt of 2,2'-methylene-bis(4,6-di-tert-butylphenyl)-phosphate, the sodium salt of 2,4,8,10-tetra(tertbutyl)-6-bis-(4,6-di-tert-butylphenyl)phosphate (Irgastab^{®} NA 287), aluminium-hydroxybis-[2,2'-methylene-bis(4,5-di-tertbutylphenyl)]-phosphate and mixtures thereof.

Preferred examples of nucleating agents are a benzoate salt, more preferably sodium benzoate; 1 ,3,5-tris(2,2-dimethylpropionylamino)benzene; a salt, more preferably the sodium salt, of 2,2'-methylene-bis(4,6-di-tert-butyl-phenyl)phosphate; and a salt, more preferably the sodium salt, of 2,4,8,10-tetra(tert-butyl)-6-bis-(4,6-di-tert-butylphenyl)phosphate.

Preferably, the polymer material comprises, at least two different nucleating agents, wherein the two nucleating agents are both clarifiers. Preferably, the polymer material comprises at least two different nucleating agents, wherein at least one nucleating agent is a clarifier and at least one nucleating agent is no clarifier.

Preferably, the nucleating agent which is no clarifier is selected from the group consisting of the salts of an organophosphorous acid described above, in particular the sodium salt of 2,2'-methylen-bis(4,6-di-tert-butylphenyl)-phosphate, the sodium salt of 2,4,8,10-tetra(tert-butyl)-6-bis-(4,6-di-tert-butylphenyl)phosphate and mixtures thereof.

Preferably, the clarifier is selected from the group consisting of a sorbitol acetate, a rosin based nucleating agent, an aromatic trisamide, and mixtures thereof. Preferred examples of these compounds are mentioned above. Sorbitol acetates and aromatic trisamides are preferred clarifiers.

Particular preferred examples of clarifiers aromatic trisamides, in particular 1,3,5-benzene-tricarboxamide, 1,3,5-tris(2,2-dimethylpropionylamino)benzene and mixtures thereof.

Preferably, a nucleating agent, which is a clarifier, preferably an aromatic trisamide, such as 1 ,3,5-benzene-tricarboxamide, 1 ,3,5-tris(2,2-dimethylpropionylamino)benzene and mixtures thereof, and a nucleating agent, which is no clarifier, preferably salts of an organophosphorous acid, such as the sodium salt of 2,2'-methylen-bis(4,6-di-tert-butylphenyl)-phosphate, the sodium salt of 2,4,8,10-tetra(tertbutyl)-6-bis-(4,6-di-tert-butylphenyl)phosphate, and mixtures thereof, are used in combination. Even more preferably, this combination of two different nucleating agents is combined with a HALS compound as charge adjuvant, such as poly[[6-[(1,1,3,3-tetramethylbutyl)amino]-1,3,5-triazine-2,4-diyl][(2,2,6,6-tetramethyl-4-piperidinyl)imino]-1,6-hexanediyl[(2,2,6,6-tetramethyl-4-piperidinyl)imino]].

The first melt-blown layer may have a porosity in the range of 91% to 94%.

The first layer 102 may comprise PP fibers, PC fibers, PA fibers, PLA fibers or a combination thereof. It may alternatively or additionally be electrostatically charged.

The thickness t1 of the first layer 102, cf. figure 2, may be in the range of 0.4 to 1.2 mm, particularly in the range of 0.5 to 0.9 mm. A preferred value for this thickness is 0.66 mm.

The air permeability of the first layer 102 may be in the range of 1,300 to 3,000 l/(m²s), particularly in the range of 1675 to 2500 l/(m²s). A preferred value for this air permeability is 2,045 l/(m²s).

The basis weight of the first layer 102 may be in the range of 20 to 100 g/m², particularly in the range of 35 to 175 g/m². A preferred value for this basis weight is 50 g/m².

Turning now to the second layer 104, this layer preferably is a carrier layer. As such, it provides stability and support for the other two layers 102, 106.

The second layer 104 may be a dry-laid nonwoven, for example a spunbond or carded web, or a wet-laid nonwoven. The dry-laid nonwoven may include mono- and/or bi-component fibers.

Suitable polymers for the fibers of the second layer 104 are for example polypropylene, polycarbonate, polyester (such as polyethylene, polyethylene terephthalate, polybutylene terephthalate), polyamide, polylactide and mixtures thereof.

The bi-component fibers may comprise a first component, which is polypropylene, PP, and a second component, which is polyethylene terephthalate, PET. Preferably, the bi-component fibers are at least one of the following: core-and-sheath fibers, side-by-side fibers, tipped fibers, and islands-in-the-sea fibers.

The fibers of the second layer 104 may be bonded to each other by heat, calandering, needlepunching or hydroentangling.

The thickness t2 of the second layer 104, cf. figure 1, may be in the range of 0.1 to 1 mm.

The air permeability of the second layer 104 may be in the range of 2,000 to 10,000 l/(m²s).

The basis weight of the second layer 104 may be in the range of 10 to 200 g/m², preferably 20 to 100 g/m².

Turning now to the third layer 106, this layer is made of electrospun nanofibers.

The nanofiber layer 106 preferably is a filter layer. It captures the fine dust in the traversing air F.

Preferably, the nanofibers of the third layer 106 are at least one of the following: polyamide, PA, fibers; polyester fibers, such as polyethylene terephthalate, PET, fibers; polyvinyl chloride, PVC, fibers; polyolefin fibers; polyvinyl alcohol, PVAL, fibers; polyurethane, PUR, fibers; polyvinylidene fluoride, PVDF, fibers.

The diameter of the nanofibers typically is less than 800 nm. A preferred range for the diameter of the nanofibers is 50 to 300 nm.

The thickness t3 of the third layer 106, cf. figure 1, may be in the range of 50 nm to 500 µm, preferably 50 nm to 50 µm, more preferably 100 nm and 5 µm.

The air permeability of the third layer 106 may be in the range of 100 to 1,500 l/(m²s), preferably 300 to 1,300 l/(m²s), more preferably 500 to 1,200 l/(m²s). A preferred value for this air permeability is 900 l/(m²s).

The basis weight of the third layer 106 may be in the range of 0.001 to 5 g/m², preferably 0.5 to 5 g/m², more preferably 0.1 to 2 g/m².

With reference to figure 2, we will now describe a second embodiment 200 of a non-woven filter media according to the present disclosure. The following description of the second embodiment is limited to the differences of the second embodiment compared to the first embodiment. A description of the elements comparable to the first embodiment is omitted. For these comparable elements, reference is made to the preceding description of the first embodiment.

In comparison to the filter media 100 of figure 1, the filter media 200 of figure 2 has an additional fourth layer 208, which makes it a four-layered filter media. The additional fourth layer 208 is arranged on the side of the first layer 202 that does not face the third layer 206. In the shown example, the second layer 204 is in contact with the third layer 206, the third layer 206 is in contact with the second layer 204 and the first layer 208, the fourth layer 208 is in contact with the first layer 202.

the fourth layer 208 may comprise a blend of acrylic fibers and polypropylene (PP) fibers. The acrylic fibers to PP fibers mass ratio of the blend may be 40:60 to 60:40, preferably 45:55 to 55:45, for example 50:50. Preferably, the acrylic fibers are polyacrylonitrile (PAN) fibers. The blend may comprise a charge additive, which is present in the PP fibers. The blend may comprise a spin finish, which is present on the acrylic fibers.

In general, the linear density of the fibers of the fourth layer 208 may be 1.2 to 3.5 dtex, preferably 1.4 to 3.3 dtex. The linear density of the PP fibers is more preferably 1.2 to 3 dtex, more preferably 1.4 to 2.8 dtex. In some cases, it can be 1.4 to 2.5 dtex, while in other cases it can be 2.5 to 2.8 dtex. The linear density of the acrylic fibers is more preferably 1.2 to 3.5 dtex, more preferably 1.4 to 3.3 dtex In some cases, it can be 1.4 to 2.2 dtex, while in other cases it can be 1.4 to 2.2 dtex or 2.2 to 3.3 dtex.

In general, the length of the fibers may be 40 to 70 mm, preferably 45 to 65 mm. The length of the PP fibers is preferably 45 to 55 mm while the length of the acrylic fibers is preferably 45 to 65 mm.

The shape of the cross-section of the fibers may be very diverse such as round shape, kidney-bean shape or dog-bone shape. A mixture of fibers with cross-sections with different shapes is also possible. For example, the PP fibers preferably all have a round shaped cross-section or part of the PP fibers have a round shaped cross-section and the remaining part a dog-bone shaped cross-section. Regarding the acrylic fibers, they preferably all have a dog-bone shaped cross-section or part of the acrylic fibers have a dog-bone-shaped cross-section the remaining part have a kidney-bean shaped cross-section.

The fourth layer 208 may also have a functional layer comprising the blend of acrylic fibers and PP fibers, and a carrier layer which will be named supporting layer in the following. In such case, the features mentioned for the fourth layer 208 above apply to the functional layer. This supporting layer can be arranged between the functional layer and the third layer 206. Alternatively, the functional layer is arranged between the supporting layer and the third layer 206. Also, this supporting layer may comprise polymeric fibers such as PP fibers and/or may be a spunbond layer which may comprise at least one of PP fibers, PET fibers, PBT fibers, PE fibers and PA fibers.

An exemplary detailed composition of the fourth layer 208 is the following:
- 45 to 55% by weight of PP fibers, which are 2.4 to 2.9dtex fibers and have an average length of 45 to 55 mm, the fibers are finish-free, have 2 to 3.5 weight.% charge additive inside and have a round-shaped cross-section;
- 45 to 55% by weight of wetspun acrylic fibers, which are 2.4 to 3.4dtex fibers and have an average length of 45 to 65 mm, the fibers have a spin finish of 0.1 to 0.35 weight.% of carnauba wax based chemical, the spin finish acts as a charge enhancing and charge retention agent, and the fibers have a kidney-bean-shaped cross-section; and
wherein the sum of PP fibers and wetspun acrylic fibers makes 100%.

This latter composition is the composition of the functional layer of the Alphastar^{™}, an electrostatic nonwoven product available from the filtration solutions company MATIV Holding Inc. Thus, in one embodiment, the fourth layer 208 may be made from Alphastar^{™}. A preferred Alphastar^{™} product is the Alphastar^{™} AWS1100 or the Alphastar^{™} AWS1301.

The fourth layer 208, or the functional layer if a supporting layer is provided, may be carded and/or electrostatically charged. Preferably, the fourth layer 208 is a pre-filter layer.

The thickness t4 of the fourth layer 208, (with or without the supporting layer), cf. figure 2, may be in the range of 1 to 2.5 mm, preferably 1.4 to 2.0 mm, for example 1.9 mm.

The air permeability of the fourth layer 208 (with or without the supporting layer) may be in the range of 2,000 to 4,000 l/(m²s), preferably 2,500 to 3,200 l/(m²s), for example 2,600 l/(m²s).

The basis weight of the fourth layer 208 (with or without the supporting layer) may be in the range of 60 to 110 g/m², preferably 75 to 100 g/m², for example 95 g/m².

Preferably, the fourth layer 208 acts as an additional pre-filter layer in addition to the pre-filter layer 202, that captures coarse dust from the traversing air F before the traversing air F reaches the nanofiber layer 206. The nanofiber layer 206 then captures the fine dust that remains in the traversing air F. Accordingly, the pre-filter layer 208 prevents coarse dust from reaching the nanofiber layer 206 so that the latter can operate under good conditions and keep filtering for longer.

The combination of the pre-filter layer 208 and the nanofiber filter layer 206 is particularly advantageous in that it combines the advantage of a nanofiber layer, namely a high filtration efficiency at a low pressure drop, with the advantage of an acrylic and PP fiber layer, namely a high dust holding capacity.

The total thickness T of the filter media 200, cf. figure 2, may be in the range of 0.7 to 4.8 mm. A preferred value for the total thickness T is 1.93 mm.

The total air permeability of the filter media 200 may be in the range of 200 to 1,200 l/(m²s). A preferred value for the total air permeability is 528 l/(m²s).

The total basis weight of the filter media 200 may be in the range of 100 to 290 g/m². A preferred value for the total basis weight is 152 g/m².

The total filtration efficiency of the filter media 200 may be, according to EN ISO 16890-1 :2016, in the ePM2.5 class or better, preferably in the ePM1 class. Most preferably, the total filtration efficiency is in the ePM1[75%] category.

With reference to figure 3, we will now describe a third embodiment 300 of a non-woven filter media according to the present disclosure. The following description of the third embodiment is limited to the differences of the third embodiment compared to the first embodiment. A description of the elements comparable to the first embodiment is omitted. For these comparable elements, reference is made to the preceding description of the first embodiment.

In comparison to the filter media 100 of figure 1, the filter media 300 of figure 3 has one additional layer, which makes it a four-layered filter media. That is, there are two carrier layers 304a, 304b instead of a single carrier layer 104. Each one of the two carrier layers 304a, 304b may be as described above and need not be identical to each other.

One carrier layer 304a is in contact with the nanofiber layer 306 while the other carrier layer 304b is placed between the melt-blown layer 302 and the nanofiber layer 306 and in contact with both of these layers.

With reference to figure 4, we will now describe a fourth embodiment 400 of a non-woven filter media according to the present disclosure. The following description of the fourth embodiment is limited to the differences of the fourth embodiment compared to the third embodiment. A description of the elements comparable to the third embodiment is omitted. For these comparable elements, reference is made to the preceding description of the third embodiment.

The filter media 400 of figure 4 has a total of five layers. Compared to the filter media 300 of figure 3, instead of one nanofiber layer 306, there are two nanofiber layers 406a, 406b. Each one of the two nanofiber layers 406a, 406b may be as described above and need not be identical to each other.

The two nanofiber layers 406a, 406b are next to and in contact with each other and between both carrier layers 404a, 404b.

In a variant, any of the filter media 100, 200, 300, 400 described above, may further comprise an adsorption layer (not shown) . Such an adsorption layer can be used to equip the filter media 100, 200, 300, 400 and produce a combination filter. The adsorption layer can be provided anywhere in the filter media 100, 200, 300, 400, but is preferably attached to the prefilter. The adsorption layer can be attached upstream or downstream of the filter media. As a result of this design, not only particles, but also unpleasant odours can be adsorbed.

The adsorption layer may present saturated and/or unsaturated activated carbon particles. For example, the filter media 100, 200, 300, 400 may present an adsorption layer made of activated carbon, zeolites or ion exchangers. As a result, noxious gases, such as hydrocarbons, SO₂, NOx or the like can be adsorbed.

The activated carbon is glued with any to the selected layer by any suitable glue.

### Examples

In the following, we present one concrete example of non-woven filter media according to the present disclosure.

### Example 1

This example of a filter media according to the present disclosure has a layer composition corresponding to Fig. 1.

The melt-blown layer 102 is an electrostatically charged melt-blown layer made of polypropylene fibers and has a thickness of 0.66 mm, air permeability @200 Pa of 2045 l/m²/s and a basis weight of 50 g/m². The carrier layer 104 is a spunbond layer made of polypropylene fibers. The filter layer 106 is made of polyamide nanofibers. The filter layer 106 was obtained by electrospinning a polyamide solution onto the carrier layer 104, thereby depositing polyamide nanofibers onto the carrier layer 104.

### Comparative example 1 - Synthetic filter media ePM1 [60%] class

The filter media was purchased from TROX GmbH (www.trox.de) and is an ePM1 [60%] PFS filter made of 4 non-woven synthetic layers, i.e 2 spunbond layers (SB) and 2 meltblown layers (MB) in a configuration of SB-MB-SB-MB.

### Comparative example 2 - Nano Wave filter media of ePM1[65%] class

The filter media NanoWave^{®} sold by Hollingsworth & Vose^{®} is used as a comparative example since it is commonly viewed as an efficient filter of good quality currently available on the market. More precisely, a PFN bag filter made of NanoWave^{®} filter media of filtration efficiency class ePM1[65%] was purchased from TROX GmbH (www.trox.de).

### Test results

The following table shows the measurement results obtained for the main characteristics of the filter media according to example 1 and example 2, and according to the comparative example:

| | **Example 1** | **Comparative example 1** | **Comparative example 2** |
|---|---|---|---|
| Initial pressure drop (Pa) | 62 | 100 | 83 |
| *DHC @ +50 Pa (g*/*m²)* | *20* | *18* | *30* |
| Basis weight (g/m²) | 100 | 136 | 150 |
| Thickness @ p=0.5 kPa (mm) | 0.86 | 1,7 | 3,2 |
| Filtration efficiency | ePM1[65%] | ePM1[60%] | ePM1[65%] |

As apparent from the above table, the filter media according to the example indeed combine a very good filtration efficiency, which is at least as good as the comparative examples, with a low initial pressure drop and a good dust holding capacity (DHC) while being lighter and thinner. Further, the value of the example for the initial pressure drop is considerably better than the corresponding values of the comparative examples. Less pressure drop signifies that less energy is consumed even though filtration efficiency may be the same (example 1 vs. comparative example 2). The thickness of example 1 is also significantly lower than comparative examples 1 and 2. Lower thickness and basis weights mean that the product is cheaper to manufacture and transport.

Figure 5 is a graph showing the results of filter life testing for the filter media of the example and the comparative examples. In this test, each tested filter media is subjected to the same air flow laden with the same standard test dust. The parameters of the test are given in figure 5 (test dust used: ISO 12103-A2 (ISO fine); air velocity: 20 cm/s; dust concentration: 75 mg/m³; particle size: 0.19-10 µm). While the dust-laden air flows through the tested filter media, the pressure drop across the tested filter media is measured and recorded once per minute until the pressure drop has increased by 50 Pa from the initial pressure drop. Curve C1 in figure 5 shows the results for example 1 and curve C2 the results for comparative example 1 and C3 the results for comparative example 2. Comparative example 2 might appear as having better dust holding capacity, but this observation must be made keeping in mind that example 1 is significantly thinner and lighter.

### Conclusion

The non-woven filter media disclosed herein combine a good filtration efficiency with a low pressure drop and a high dirt holding capacity. They are thus suitable for high-end filtration applications. On top of that, the manufacturing of the disclosed non-woven filter media is comparatively simple, which makes them inexpensive.

## Claims

1. A non-woven filter media (100, 200) comprising:
a. a first melt-blown layer (102, 202) comprising fibers made from a polymer material, wherein the polymer material comprises a thermoplastic resin and at least one of a charge adjuvant and a nucleating agent;
b. a second layer (104, 204); and
c. a third layer (106, 206) arranged between the first layer and the second layer, the third layer being made of electrospun nanofibers.

2. The media according to the previous claim, wherein the media is an air filter media.

3. The media according to any one of the previous claims, wherein the first melt-blown layer has a porosity in the range of 91% to 94%.

4. The media according to any one of the previous claims, wherein the first melt-blown layer is electrostatically charged.

5. The media according to any one of the previous claims, wherein the first melt-blown layer is a pre-filter layer.

6. The media according to any one of the previous claims, wherein the first melt-blown layer comprises polypropylene (PP) fibers, polycarbonate (PC) fibers, polyester fibers or a combination thereof.

7. The media according to any one of the previous claims, wherein the thickness of the first melt-blown layer is in the range of 0.4 to 1.2 mm.

8. The media according to any one of the previous claims, wherein the air permeability of the first melt-blown layer is in the range of 1,300 to 3,000 l/(m²s).

9. The media according to any one of the previous claims, wherein the basis weight of the first melt-blown layer is in the range of 20 to 100 g/m².

10. The media according to any one of the previous claims, wherein the electrospun nanofibers of the third layer are polyamide, PA, fibers; polyester fibers, such as polyethylene terephthalate, PET, fibers; polyvinyl chloride, PVC, fibers; polyolefin fibers; polyvinyl alcohol, PVAL, fibers; polyvinylidene fluoride fibers; and polyurethane, PUR, fibers; or a combination thereof.

11. The media according to any one of the previous claims, wherein the total basis weight of the media is in the range of 40 to 290 g/m².

12. The media according to any one of the previous claims, wherein the total filtration efficiency of the media, according to EN ISO 16890, is in the range of ePM1[50%] to ePM1[90%].

13. The media according to any one of the previous claims, wherein the second layer is a spunbond layer.

14. The media according to any one of the previous claims, further comprising a fourth layer (208) including acrylic fibers, polypropylene (PP) fibers or a combination thereof, optionally the fourth layer is electrostatically charged.

15. The media according to the previous claim, wherein the first melt-blown layer and the third layer are arranged between the second layer and the fourth layer.

16. A filter element comprising the media of any one of the previous claims.

17. A bag filter for a heating, ventilation and air conditioning system, the bag filter comprising the filter media of any one of claims 1 to 15 or the filter element of claim 16.
